# EUROPEAN PATENT SPECIFICATION

(11) **EP 2 111 758 B1**
(45) Date of publication and mention of the grant of the patent: **28.09.2011**
(21) Application number: 08007911.4
(22) Date of filing: 24.04.2008
(51) Int. Cl.: A23G 1/00, A23G 1/18, A23G 1/20

(54) **Tempering apparatus with gas mixing**
Temperierungsgerät mit Gasvermischung
Appareil de malaxage avec mélange de gaz

(43) Date of publication of application: 28.10.2009
(73) Proprietor: AASTED-MIKROVERK APS, 3520 Farum (DK)
(72) Inventor: Haslund, Henning, 4632 Bjaeverskov (DK)

(56) References cited:
- EP-A- 0 818 150
- EP-A- 0 872 187
- EP-A- 1 175 837
- EP-A- 1 547 469
- WO-A-01/80660
- WO-A-92/00015

## Description

The present invention concerns the technical field of chocolate tempering machines.

The apparatus for continuous tempering of chocolate mass having a vertical tempering column with at least one cooling stage for providing crystals in the chocolate mass.

Such tempering machines are widely known and the vertical tempering column has disc-shaped chocolate chambers interconnected via chocolate channels passing through intermediary disc-shaped water chambers for cooling or heating of the mass. A central vertical shaft in the column is connected with mixing tools arranged in the chocolate chambers.

A control unit controls the water temperature in the cooling stage to the appropriate level according to desired calorie transport from the heated chocolate and to the water.

Before the mass is supplied to perform the actual tempering process by running continuously through the apparatus, the mass is typically heated to around 40-50°C in a premature step so that all the crystals in the chocolate mass are melted.

During the actual tempering process in the apparatus the chocolate mass is being cooled to around 25-34°C in the cooling stage so that crystals are created. Then the mass is typically reheated slightly around 0,5-2,0°C in a reheating stage for melting out most of the in-stable crystals in the mass, however then preserving a content of stable β-crystals which melts at a higher temperature than the in-stable crystals. The stable crystals are preserved in the mass ready for depositing in an amount of typically 0,01% - 5%, preferably in an amount of 0,1% - 2%.

Generally, chocolate mass encompasses all types of suspensions of non-fat particles such as sugar, milk powders and cocoa solids mixed up with a liquid fat constituent which are capable of crystallizing. When it comes to pure chocolate mass, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the tempering to be performed, it is decisive, that whether the fat phase constitutes of genuine cocoa butter or substitutes therefore, the fat phase must be capable of crystallizing into stable crystal types, such as the β-crystals developing in genuine cocoa butter when the mass solidifies. Only then eatable chocolate articles with god taste and shiny appearance are created.

After having passed through the tempering apparatus the chocolate mass is typically deposited into moulds or deposited on top of pre-made articles.

Today more and more manufacturers of chocolate articles desire a tempered mass with a content of gas, i.e. "aerated" chocolate, it could be for solid, moulded tablets or it could be for a centre mass.

However it is still desired that the tempered chocolate keeps its high quality in respect of the desired "recipe" for the particular product, meaning that crisp, break, taste and shine is preserved even when gas is injected into the tempered mass. So, when the manufacturer has achieved the desired quality and tempering curves for the tempered mass it is important that it is not adversely affected by the gas-mixing.

EP 0 818 150 A2 discloses a tempering apparatus for continuous tempering of chocolate mass having a vertical tempering column with cooling stages and a reheating stage for providing crystals in the chocolate mass.

The vertical tempering column has disc-shaped chocolate chambers interconnected via chocolate channels passing through intermediary disc-shaped water chambers for cooling or heating of the mass. A central vertical shaft in the column is connected with mixing tools arranged in the chocolate chambers. Built-in in one of the disc-shaped chocolate chambers is a sheave being driven by the vertical shaft. The sheave carries a great number of vertical pins. At different diameters are arranged other vertical pins on the bottom and on the ceiling of the particular chamber. Gas is being injected into the chocolate mass just before it enters into the particular chamber with the sheave carrying the pins. After the gas is mixed into the mass it continues further on through the remaining chamber of the column being further tempered and crystallised. The actual shear, cooling and reheating applied to the mass being tempered will then also influence the already aerated mass. Excess aerated mass can not be recycled and must be wasted. Furthermore is the machine very cumbersome to clean in between production shifts due to the built-in mixing element in the chamber.

The purpose of the present invention is to provide a tempering apparatus with which the mixing of gas into the mass is independent of the tempering process itself.

The tempering apparatus according to the present invention is characterised in, that a vessel for reheating of the mass is arranged at the top of the column and that an outlet for the tempered chocolate mass is arranged at the bottom of the column, that a main conduit extends from the outlet and to above the vessel, that in the conduit is arranged pump means for the chocolate mass as well as valve means, that a mixing unit adapted for mixing of gas into the chocolate mass is arranged at the column being connected with the valve means.

Thereby the mass is completely ready tempered according to the desired wish before gas is mixed into the mass. Consequently, the recipe of the mass can be controlled completely independent of the desired amount and type of gas to be mixed into the mass. The machine is also easy to clean as the mixing unit itself is separated from the tempering column.

It is also advantageous that the tempering apparatus can be used with its full capacity for tempering chocolate mass without the need of mixing gas into the mass.

When the apparatus according comprises a rotating sheave which is arranged in the upper vessel, and the outlet of the mixing unit is connected with a secondary conduit that ends above the sheave excess tempered and aerated mass can be recycled and de-aerated before it runs through the tempering machine for a new tempering process.

When the mixing unit is wired to the control unit of the tempering machine the speed of the mixing unit is automatically adjusted and coordinated with the data of the actual tempering process performed and the amount of the gas delivered.

Advantageously the mixing unit can also be connected with a source of aroma means or with a source of colour means.

The invention is further described by referral to the drawing, in which

figure 1 schematically discloses a tempering apparatus according to the invention, though with schematically disclosed electrical wiring to the gas and aroma units as well as to the control unit of the tempering machine, and

figure 2 in perspective the tempering apparatus connected with other apparatus for manufacturing of chocolate articles.

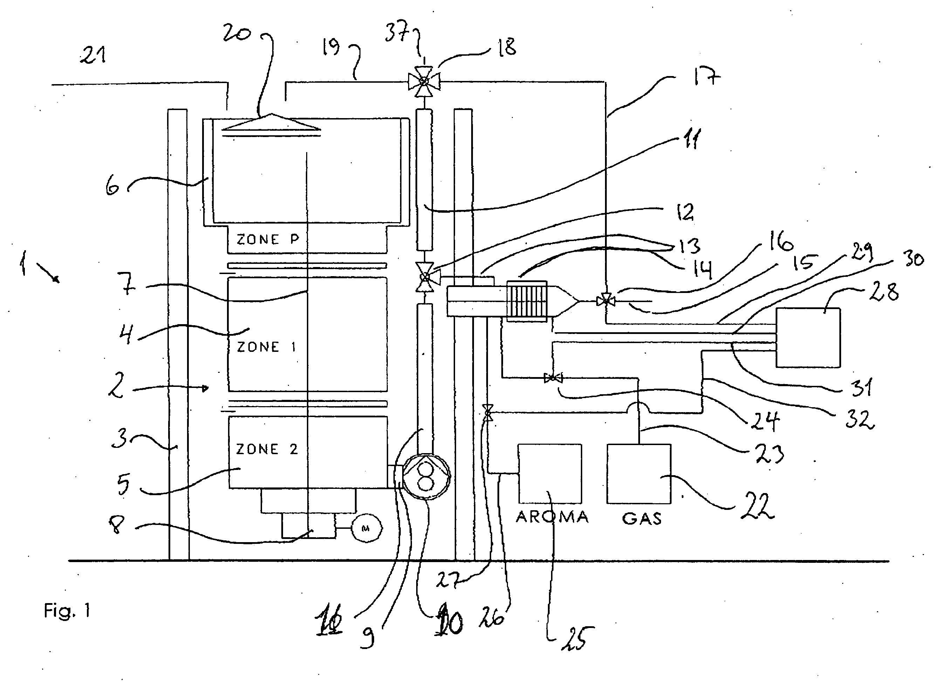

The tempering apparatus 1 disclosed in figure 1 comprises a vertical tempering column 2 arranged in a support 3. The tempering column 2 comprises a cooling stage 4 (Zone 1) as well as a reheating stage 5 (Zone 2) in which undesirable crystals are melted again. On top of the column 2 is arranged a vessel 6 for heating and stabilising of the chocolate mass so that it is essentially free from crystals when it enters the cooling stage 4. A vertical shaft schematically disclosed as a centre line 7 is driven by a gear motor 8. The cooling stage 4 as well as the reheating stage 5 are built up by disc-shaped chocolate chambers interconnected by chocolate channels passing through intermediary disc-shaped water chambers. In the chocolate chambers are arranged mixing tools connected with the central shaft 7. This build-up wise is well-known and consequently not shown as it doesn't constitute part of the invention.

An outlet 9 for the tempered mass is arranged at the bottom of the column, i.e. at the reheating stage 5. A pump 10, typically a so-called monopump, is connected with the outlet 9 as well as a main conduit 11 extending up to above the vessel 6. In the conduit 11 is arranged a three-way valve 12 , which is further connected via a conduit 13 with a mixing unit 14 adapted for mixing of gas into the chocolate mass. The mixing unit 14 is mounted in the support 3 of the tempering machine 1 at the column 2.

A further conduit 15 transports the aerated mass, i.e. after the gas is mixed into the mass, away from the mixer and to further treatment such as to a depositor. In the conduit 15 is arranged a three-way valve 16 from which a conduit 17 leads to a four-way valve 18 connected with the conduit 11 as well as with a conduit 19 that leads in above the vessel 6 and above a rotating, triangularly shaped sheave 20. A further conduit 21 for the supply of the chocolate mass to be tempered from an external source ends above the vessel 6 as well.

A pressure tank 22 for gas is connected with the mixing unit 14 via a hose 23. In the hose 23 is arranged a valve 24 for control of the delivery of gas. A container 25 for delivery of aroma is connected via a conduit 26 with the mixer 14. A valve 27 is arranged in the conduit 26 for the control of the delivery of aroma to the chocolate mass if desired.

A control unit 28 such as a PC or a PLC unit is wired to the valve 16, to the mixer 14 as well as to the valve 24 controlling the delivery of gas as well as to the valve 27 via wires 29, 30, 31, 32 respectively. The control unit 28 could advantageously be the control unit of the tempering machine so that especially the control of the mixing unit 14 is adjusted to the instantaneous control of the tempering machine.

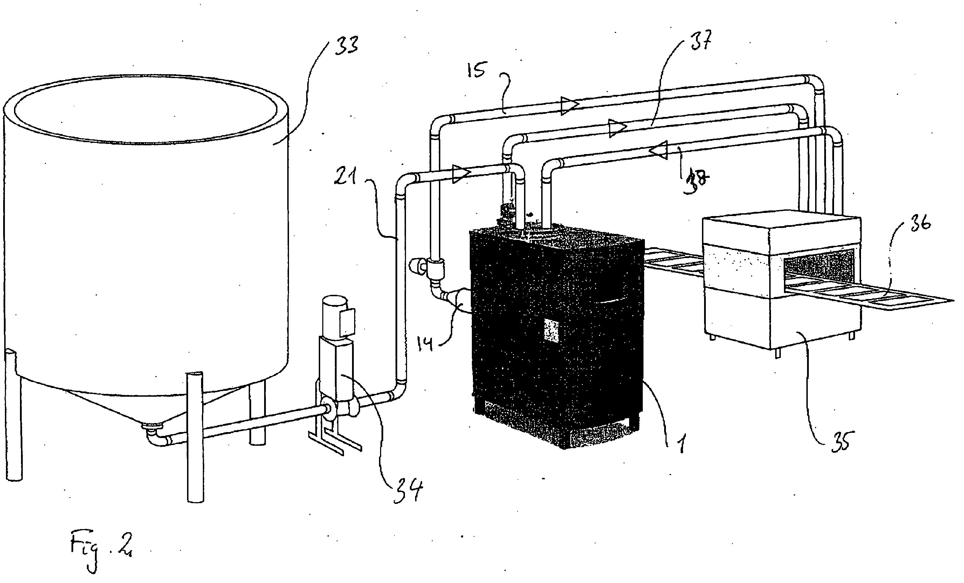

At figure 2 is disclosed a configuration set up for production run.

The conduit 21 extends from an external storage tank 33, via a pump 34 and ends above the vessel 6 of the tempering machine 1. From the mixing unit 14 the conduit 15 extends to a depositor 35. Schematically disclosed mould plates 36 travels through the depositor 35. A conduit 37 is able to supply chocolate mass directly to the depositor by-passing the mixing unit 14. A further conduit 38 can redirect excess mass from the depositor and to the vessel 6 above the top of the tempering column 2 in the tempering machine 1.

The chocolate mass is heated in the vessel 33 to a temperature of typically 45-50°C and is pumped via the pump 34 and the conduit 21 to the vessel 6. The vessel stabilises the temperature to the desired level so that all crystals are melted up in the mass, i.e. typically 45-50°C. The mass is transported through the tempering column 2 and is cooled in the cooling stage 4 to the desired temperature so that typically the desirable Beta5 crystals are created. Then the chocolate enters the reheating stage 5 in which the lower melting crystals are melted up again so that the crystals remaining in the mass is essentially Beta5. As no gas mixing is performed in the tempering process itself it can take place to the desired quality and properties of the mass without taking into account the gas mixing and its influence to the delicate tempering process. Then the appropriate tempering curves can be achieved as well as the shear of the mixing process does not influence on the shear developed in the tempering process.

The ready tempered mass is pumped via the pump 10 through the conduit 11. Via the valve 12 it can be controlled if the complete amount of mass shall go to the mixer 14 via the conduit 13, or if some part of the tempered mass shall be recycled into the vessel 6 via the valve 18 and the conduit 19. In the mixer 14 the appropriate amount of gas enters the tempered chocolate mass and is mixed with it to create the desired size and amount of "bubbles" in the mass. The mixer distributes the gas bubbles homogenously in the mass so that the ready moulded articles are of high quality. Via the conduit 15 the ready aerated mass is delivered to the depositor as disclosed in figure 2.

If to much aerated mass is delivered to the depositor 35 excess mass can be returned via the conduit 38 as disclosed in figure 2 or it can already be returned via the valve 16 and the conduit 17 to the conduit 19 that ends above the vessel 6. There the aerated mass runs down and impacts on top of the triangulary shaped, rotating sheave 20. The effect of this is that the gas bubbles in the mass is exposed to the environment and effectively brought to leave the mass. The mass is thereafter tempered again without any content of gas which would influence the tempering process and stability and control of the aeration process.

The control unit 28 of the tempering machine controls all the settings of the tempering process such as typically temperatures in the column 2 and flow of chocolate to and from the machine. Then it is advantageous that the control unit 28 also controls the delivery of especially the gas amount as well as the control parameters of the mixing unit 14 such as typically the rotational speed of it.

## Claims

1. Apparatus for continuous tempering of chocolate mass having a vertical tempering column (2) with at least one cooling stage (4) for providing crystals in the chocolate mass,
**characterised in,**
**that** a vessel (6) for heating of the mass is arranged at the top of the column (2) and that an outlet (9) for the tempered chocolate mass is arranged at the bottom of the column (2),
**that** a main conduit (11) extends from the outlet (9) and to above the vessel (6), that in the conduit (11) is arranged pump means (10) for the chocolate mass as well as valve means (12),
**that** a mixing unit (14) adapted for mixing of gas into the chocolate mass is arranged at the column (2) being connected with the valve means (12), and that the mixing unit (14) is connected with a source (22) of gas means.

2. Apparatus according to claim 1, **characterised in, that** a rotating sheave (20) is arranged in the upper vessel (6), and that the outlet of the mixing unit (14) is connected with a secondary conduit (17) that ends above the sheave (20).

3. Apparatus according to claim 1, **characterised in, that** the mixing unit (14) is wired (30) to the control unit (28) of the tempering machine (1).

4. Apparatus according to claim 1, **characterised in, that** the mixing unit (14) is connected (26) with a source (25) of aroma means.

## Patentansprüche

1. Eine Vorrichtung für die kontinuierliche Temperierung von Schokoladenmasse mithilfe einer vertikalen Temperiersäule (2) mit mindestens einer Kühlstufe (4) zur Bildung von Kristallen in der Schokoladenmasse,
die **dadurch gekennzeichnet ist,**
**dass** oben an der Säule (2) ein Behälter (6) zur Erwärmung der Masse und unten an der Säule (2) ein Auslass (9) für die temperierte Schokoladenmasse angebracht sind,
**dass** ein Hauptrohr (11) vom Auslass (9) bis über den Behälter (6) verläuft und sich in dem Rohr (11) eine Pumpvorrichtung (10) für die Förderung der Schokoladen masse sowie eine Ventilvorrichtung (12) befinden,
**dass** an die Säule (2) eine Mischvorrichtung (14) für die Zuführung von Gas in die Schokoladen masse angebracht und über die Ventilvorrichtung (12) angeschlossen ist, und dass die Mischvorrichtung (14) an eine Gaszufuhr (22) angeschlossen ist.

2. Eine Vorrichtung entsprechend dem Anspruch 1, die **dadurch gekennzeichnet ist, dass** sich in dem oberen Behälter (6) eine rotierende Scheibe (20) befindet und der Auslass der Mischvorrichtung (14) mit einem zweiten Rohr (17) verbunden ist, das über der rotierenden Scheibe (20) endet.

3. Eine Vorrichtung entsprechend dem Anspruch 1, die **dadurch gekennzeichnet ist, dass** die Mischvorrichtung (14) mit der Steuereinheit (28) der Temperiermaschine (1) elektronisch verkabelt (30) ist.

4. Eine Vorrichtung entsprechend dem Anspruch 1, die **dadurch gekennzeichnet ist, dass** die Mischvorrichtung (14) mit einer Quelle (25) für die Zuführung von Aromastoffen verbunden (26) ist.

## Revendications

1. Appareil de tempérage continu de masse de chocolat, équipé d'une colonne de tempérage verticale (2) comportant au moins un étage de refroidissement (4) pour l'incorporation de cristaux dans la masse de chocolat,
**caractérisé en ce que**
la cuve (6) de chauffage de la masse est disposée au sommet de la colonne (2) et qu'une sortie (9) de la masse de chocolat tempéré est placée au bas de la colonne (2),
que la conduit principal (11) s'étend de la sortie (9) jusqu'au-dessus de la cuve (6), que dans le conduit (11) est placé un moyen de pompage (10) de la masse de chocolat et un dispositif de commande de débit de fluide (12),
que l'unité de mélange (14) adaptée à l'incorporation de gaz dans la masse de chocolat est disposée de manière que la colonne (2) soit raccordée au dispositif de commande de débit de fluide (12) et que l'unité de mélange (14) soit raccordée à une source d'alimentation en gaz.

2. Appareil selon la revendication 1, **caractérisé en ce qu'**une roue à gorge rotative (20) est placée dans la cuve supérieure (6) et que la sortie de l'unité de mélange (14) est raccordée à un conduit secondaire (17) qui se termine au-dessus de la roue à gorge (20).

3. Appareil selon la réclamation 1, **caractérisé en ce que** l'unité de mélange (14) est raccordée par câble (30) à l'unité de commande (28) de la tempéreuse (1).

4. Appareil selon la réclamation 1, **caractérisé en ce que** l'unité de mélange (14) est raccordée par câble (26) à une source d'alimentation en arôme (25).
